# EUROPEAN PATENT SPECIFICATION

(11) **EP 1 338 406 B1**
(45) Date of publication and mention of the grant of the patent: **18.11.2009**
(21) Application number: 03250938.2
(22) Date of filing: 15.02.2003
(51) Int. Cl.: B29C 70/08

(54) **Moulding materials and method of forming such materials**
Formmassen und Verfahren zu deren Herstellung
Matières à mouler et procédé pour leur fabrication

(30) Priority: 19.02.2002 GB 0203823
(43) Date of publication of application: 27.08.2003
(73) Proprietor: Hexcel Composites Limited, Cambridge CB2 4QD (GB)
(72) Inventor: Ellis, John, Cambridge CB2 4SF (GB)
(74) Representative: Wilson Gunn

(56) References cited:
- WO-A-00/27632
- US-A- 4 213 930
- US-A- 6 096 669
- PATENT ABSTRACTS OF JAPAN vol. 2003, no. 01, 14 January 2003 (2003-01-14) & JP 2002 249605 A (TORAY IND INC), 6 September 2002 (2002-09-06)

## Description

This invention relates to composite moulding materials of resin and reinforcement fibre in which the resin is only partially impregnated into the fibre.

Moulding materials are normally supplied in a continuous roll but may also be provided as pre-cut sheets. In either case the material may be laid up in multiple layers on a shaped moulding surface, alone or in combination with further resin, and then processed (e.g. by application of heat and pressure) to form strong, light-weight structures e.g. for use in forming panels or body sections or components in aerospace, automotive, wind energy or other contexts.

The fibrous reinforcing material may be partially or substantially fully impregnated with the resin in the pre-form, resulting in a so-called semi-preg or pre-preg. The fibrous material advantageously may comprise tows with fibres which are unidirectional i.e. which extend predominantly in a common direction, since this facilitates manufacture of strong laminates of high mechanical integrity suited to the production of relatively long, large and thick structures such as wind energy blades.

Semi-pregs in which the fibrous material is only partially resin-impregnated so as to leave a 'dry' outer surface, i.e. a surface having free fibres not impregnated by resin, can advantageously facilitate ready release of trapped air during processing which minimises void content and consequent mechanical weakening in the finished product. However, there is the problem that a unidirectional alignment of the exposed dry fibres on the outer surface tends to become disrupted during handling, cutting and laying-up with consequent reduction in mechanical integrity of the finished product. Moreover contaminant fibrous debris may be produced.

Disruption of fibre alignment can be avoided with conventional pre-pregs due to the full resin impregnation of the'fibrous material, but with these materials, problems of handling and void content can arise particularly when using heavy fibre bundles.

WO 00/27632 provides an example disclosure of a semi-preg which has exposed dry fibres and which would therefore exhibit the above mentioned fibre-disruption problem.

EP 0583090A describes sandwiching of fibrous material between resin films. The fibrous material is impregnated by the resin matrix which would prevent surface disruption of fibres. However, this technique, particularly if used with substantial unidirectional fibre tows, would tend to give only partial impregnation thereby leading to air entrapment in the dry fibres in the centre of the pre-form causing voids and consequent poor mechanical strength in the finished product.

With a view to improving mechanical integrity it is known to cross-stitch unidirectional fibre tows. This is described in WO98/34979 in the context of a semi-preg. However loose or broken filaments from the stitching process can cause performance deterioration in the laminate and also does not necessarily solve the handling problems associated with unidirectional tows.

Warp fibre bundles can be held together in pre-forms with thermoplastic stabilising yarns. However, if the melting point of the thermoplastic is higher than the processing temperature of the pre-form resin matrix, the yarns can give rise to fibre distortion, and hence poor mechanical properties, where the weft yarns are crimped over the warp. If the thermoplastic has a lower melting point then the resin matrix processing temperature, the thermoplastic melts and flows into the resin matrix producing voids in the finished product.

US 6096669 describes the formation of a pre-form obtained by sandwiching unidirectional fibre tows between resin films which are in the form of openwork diamond-pattern grids. The grids act to hold the fibres in position but are relatively insubstantial and a resin matrix is introduced externally by penetration through the grids using a conventional so-called resin transfer moulding process. Such processes are used for production of relatively small, short length structures and are not appropriate for larger, longer length structures, where adequate resin flow along the fibre pre-form cannot be ensured.

USP 4213930 describes the use of a gravure roll to apply small amounts of resin to the surface of a pre-preg to improve surface tack on a fully impregnated pre-form.

An object of the present invention is to provide a semi-preg moulding material having dry surface fibres which are reliably held in position in an improved manner conducive to production of composites having high mechanical integrity.

According to one aspect of the invention therefore there is provided a moulding material comprising a layer of fibrous reinforcing material having on opposite surfaces thereof respectively a first layer of resin which partially impregnates the fibrous material, and a further resin layer which retains in position surface fibres of the fibrous material, characterised in that the further resin layer is of lower weight than the first layer and is formed as an openwork structure with spaces through which the fibrous material is exposed.

With this arrangement, the moulding material is of the nature of a semi-preg, due to the first resin layer, whereby the moulding material can be processed to form structures without requiring significant introduction of an externally introduced resin matrix. Moreover, the openwork further resin layer can hold surface fibres of the fibrous material securely and smoothly in position without restricting air flow for escape of entrapped air.

The moulding material is therefore particularly suitable for use in producing relatively large, long structures which are substantially void-free and have high mechanical strength and integrity.

The fibrous reinforcing material is preferably of the unidirectional kind i.e. having fibres predominantly extending substantially in a common direction. Thus, the fibrous material may comprise multiple side by side tows i.e. loose bundles of fibres. The tows and the fibres may all extend in the common direction, or there may be some transverse fibres. In the latter case the transverse fibres are preferably such as to exert little or no positional or dimensional control on the unidirectional fibres.

Most preferably the moulding material is of elongate form particularly in the form of sheeting or a strip or tape. Preferably, also, where unidirectional fibrous material is used, the fibre common direction is preferably the longitudinal direction of the moulding material.

The fibrous material may be formed from any suitable kind of material or combination of material including synthetic and natural fibres, glass, ceramic, metal and carbon fibres. Materials which may have very small filament diameters, such as carbon fibres are specially suitable.

The fibres may be continuous or may have discontinuities and they for example may be stretch-broken or otherwise selectively discontinuous.

Discontinuous fibres can give enhanced drape and formability in the longitudinal direction. In this case, advantageously, the openwork further layer can help avoid movement of loose ends thereby improving mechanical properties by minimising misalignment.

The first resin layer is preferably a solid, substantially continuous film (i.e. substantially without spaces or openings therein) which may be sticky or tacky to the touch but is sufficiently coherent and solid as to be self-supporting at normal temperatures. This layer may be formed wholly from resin material or it may incorporate reinforcements or other materials. In one embodiment the first resin layer may be a pre-preg layer.

The resin of the first layer is preferably (although not necessarily) a heat-curable thermosetting resin matrix, and the first layer is preferably of sufficient quantity to impregnate all or at least a major part of the fibrous material during processing of the moulding material e.g. when subjected to heat and pressure.

The first and further resin layers preferably have compatible properties such that the respective layers are capable of blending on application of heat and pressure thereto to form cured layers having integral structural properties throughout. In particular the further layer is preferably formed from a resin the same as or similar in properties to the resin of the first layer. Thus, the resin of the further layer is preferably sufficiently solid and coherent as to be self-supporting at normal temperatures and in a heat-curable thermosetting resin matrix. Thus, on processing of the moulding material the resin of the further layer may blend smoothly with the resin of the first layer without adversely affecting the integrity of the cured component.

With regard to the openwork structure of the further resin layer this may take any suitable form appropriate to positional retention of the fibres without significantly occluding the surface of the fibrous layer.

Preferably, solid parts of the further layer occupy a minor proportion of the surface area of the fibrous layer, the spaces therein collectively making up the major part. The solid parts may occupy less than 25% of the surface area, say 4% to 24% of the area.

The further layer may comprise linked or continuous solid parts such as a grid pattern of solid linear elements enclosing said spaces. The grid pattern may be a regular pattern whereby said spaces are of a common geometrical shape. Alternatively the further layer may comprise a perforate web, the perforations therein forming regular or irregular spaces, which spaces may be circular, hexagonal or any other suitable shape. Alternatively, the further layer may comprise wholly separate or discontinuous solid parts which may be linear elements or other shaped parts, such as parallel lines, chevrons, dots, broken lateral lines or the like. Broken lines may be particularly preferred to facilitate air flow.

The invention also provides a method of forming a moulding material as described herein wherein a first layer of resin is applied to one face of a layer of fibrous reinforcing material so as to partially impregnate the fibrous material, and a further layer of resin material is applied to the opposite face of the layer of fibrous reinforcing material so as to retain in position surface fibres of the fibrous material, characterised in that the further resin layer is of lower weight than the first layer and is formed as an openwork structure with spaces through which the fibrous material is exposed.

The further layer may be applied in any suitable manner. This may comprise transfer e.g. via a transfer film, or by direct application to the surface. Suitable application techniques include gravure printing, reverse roll coating, forward roll coating, scatter coating, spraying, powder coating, resin gun or cartridge deposition etc.

It is also possible to establish the further layer by pull-through of resin material from the first layer. This may be done by an ultrasonic technique. This pull through may result in discrete solid parts, i.e. such that the further layer is separate from the first layer, or linked solid parts i.e. with linking strands extending between the further and first layer through the fibrous material.

The amounts and relative proportions of the resin in the first and further layers will be selected in accordance with requirement. Most preferably, the amount of resin in the further layer is a minor proportion of the first layer and in particular preferably the amount of resin in the first layer is a multiple of the amount in the further layer.

Preferably, the proportion of total resin content for the further layer is say up to 5% by weight most preferably up to 1%, the balance being provided by the first layer.

By way of example, the resin of the first layer may amount to, say 30 to 50% by weight particularly 35 to 40% of the moulding material, and the resin of the further layer may amount to say 0.1 to 20%, more preferably 0.1 to 10%.

When the openwork structure is applied from a resin-solvent mixture the resin content can be controlled to within 0.1-10.0%, more preferably 0.1-1.0%. When solvent free (hot melt) techniques are employed, the resin content can be controlled in the range 1.0-20%, more preferably 0.1-10%.

Thus, the resin in the further layer may be of the order of say 1 to 2gsm or to 30gsm from a resin solvent mixture or 2gsm to 60gsm when solvent free (hot melt) resin, and in the first layer of the order of say 75 to 150gsm or to 280gsm, and the moulding material may be say 200 or 300 to 500gsm or 700gsm or more (i.e. a possible range of say 200-800gsm) including the resin and the fibrous material, considered in relation to a single layer of fibrous material and a single said first resin layer.

Using carbon fibre as the fibrous material areal weight, any range from 80 to 6000gsm, more preferably 100 to 2500gsm and most preferably 150 to 2000gsm, and the carbon fibre filament count may be 3000 to 320000, more preferably 12000 to 160000 and most preferably 24000 to 80000.

In one example, the moulding material contains 500gsm carbon fibre, 280gsm first resin layer, and 20gsm further resin layer. In another example, the material contains 150gsm carbon fibre, 92gsm first resin layer, and 2gsm further resin layer.

The resin material of the first and/or further resin layers may be any suitable thermosetting or thermoplastic material, preferably thermosetting.

Thus, the resin may comprise an epoxide resin, bismaleimide, a phenol-aldehyde resin or any other suitable resin. Curing agents and other performance enhancing additives such as flame retardants, anti-fouling agents and tougheners may be incorporated.

Mixtures of resins may be used e.g. a mixture of a thermosetting and a thermoplastic resin.

Semi-impregnation of the fibrous material by the resin of the first layer may be effected under appropriate temperature and pressure, the temperature being lower than that required for curing. Typically the temperature may be in the range 40°C-160°C, particularly 90°-120°C; and the pressure may be 40-120psi ( 2.7-8.3 bar), particularly 80-100psi (5.5-7.0 bar). These processing conditions will vary for the different combinations of resin and fibre chosen. Methods to measure the extent of resin diffusion into fibre are well known to those in the art and include wicking techniques and microdielectric analysis.

The further layer may be contact applied i.e. such that it rests on the surface or lightly impregnates the fibrous material. Thus, this may be applied at an elevated temperature (below curing temperature) without any significant pressure.

The arrangement may be such that the resin of the first and further layers are separate from each other. Alternatively they may contact each other so as to be interconnected through the fibrous material. This may be achieved by causing portions of the resin of the first layer to extend through the fibrous material to the surface to which the further layer is applied, without wholly impregnating the entire body of fibrous material.

Advantageously, the invention can be applied to the production of a moulding material sandwich having multiple layers with one or two dry faces one or both of which may have a respective further resin layer applied thereto.

The invention further provides methods of making such sandwiches.

Thus, the invention also provides a moulding material sandwich characterised in that it comprises at least one first body of moulding material as described above with a further structure applied to the said first resin layer of such body, said structure comprising further fibrous material.

Preferably said further structure comprises a further body of moulding material as described above whereby said first and further bodies have a common said first resin layer at confronting surfaces thereof, and said further resin layers on opposite surfaces thereof.

In particular the moulding material sandwich of the invention may comprise two layers of fibrous material with a first resin layer sandwiched between and partially impregnating the two fibrous layers, and a further openwork resin layer applied to the outer surface of one or both of the fibrous layers.

The moulding material of the invention may have multiple internal layers of any appropriate materials and construction.

Possible constructions include the following:

In one embodiment a resin rich fully impregnated unidirectional or woven pre-preg can be made and used as the said first layer in place of a film made wholly of resin. Fibrous material, e.g. in the form of additional fibre tows can then be placed on top of this film followed by the openwork resin layer. Thus, and in accordance with a further aspect of the present invention there is provided a method of forming a moulding material wherein additional fibrous reinforcing material is applied to a composite structure comprising fibrous reinforcing material impregnated with a resin thereby to form a layer of said fibrous reinforcing material having a first layer of said resin which is applied to one face thereof and partially impregnates the layer of said fibrous reinforcing material, and a further layer of resin material is applied to the opposite face of the layer of fibrous reinforcing material and wherein the further resin layer is of lower weight than the first layer and is formed as an openwork structure with spaces through which the fibrous material is exposed.

In a further embodiment, a resin rich fully impregnated unidirectional or woven pre-preg can be made and additional fibrous material (e.g. fibre tows) then placed on both sides of this pre-preg. Openwork resin can then be coated onto both dry fibre surfaces. Thus and in accordance with a further aspect of the present invention there is provided a method of forming a moulding material sandwich wherein additional fibrous reinforcing material is applied to opposite faces of a composite structure comprising fibrous reinforcing material impregnated with a resin thereby to form two layers of said fibrous reinforcing material having a common first layer of said resin which is applied to one face of, and partially impregnates, each said layer of fibrous reinforcing material, and a respective further layer of resin material is applied to the opposite faces of the layers of fibrous reinforcing material.

In a yet further embodiment, an additional layer of material such as dry textiles, a gel coat film or intumescent can be laminated e.g. onto the said first layer.

Also scrims, gauzes, non-wovens, mats can be incorporated. Typically these may be less than 20gsm in weight.

Many other variations, involving sequential addition of resin-film, fibre and other material layers, are possible. This also permits the use of hybrid fibre layers.

With the invention, in its different aspects as described above, the resin of the (or each) first layer only partially impregnates the respective fibrous reinforcing material whereby such fibrous material is exposed, or is 'dry', at the opposite surface to which the openwork structure of the respective further resin layer is applied.

This partial impregnation is preferably such that none, or substantially none, of the resin of the first layer is present at the dry face (except in so far as the resin is 'pulled through' to form the openwork structure).

Moreover, this partial impregnation is preferably such that only a minor proportion of the resin impregnates the fibrous reinforcing material, the remainder being a separate adhered layer, whether in the form of an unreinforced resin film, or a pre-preg resin layer incorporating reinforcing fibres the same as or different from the fibres of the said fibrous reinforcing material. The extent of impregnation may be say in the range of 5% to 25%, typically 15% with regard to that proportion by weight of the resin of the said first layer which impregnates the respective fibrous reinforcing layer. In the case of a sandwich structure where a common said first layer is interposed between two said fibrous reinforcing material layers the impregnation may be in the range of 5% to 25% typically 15% for each fibrous reinforcing material layers, i.e. 10-50% typically 30% in total, leaving 90-50%, typically 70% as a discrete residual first layer between the fibrous reinforcing material layers.

The present invention provides a method of manufacturing a shaped moulded component wherein multiple layers of a moulding material or of a moulding material sandwich as described above are applied to a shaped moulding surface and are then cured by application of heat and pressure.

The present invention may find particular application in the context of relatively massive long length components such as wind energy blades. However it is not restricted to this field of application and may be used for aerospace, automotive or other applications.

The invention will now be described further with reference to the following Examples.

Example 1 is for comparison purposes. Examples 2-7 are in accordance with the invention.

In these Examples reference is made to Hexcel epoxy M9.6. This is a proprietary medium tack formulated epoxy resin which is suitable for low pressure moulding processes. It is very versatile and allows a range of processing temperatures from 75°C up to 160°C.

M9.1 is a higher tack version of M9.6.

913 is proprietary modified epoxy resin which has a typical cure cycle of 1 hour at 120°C.

### Example 1

A semi-pre-preg material was made at 300mm wide from unidirectional carbon fibre tows in sheet form of 150gsm fibre areal weight and 92gsm heat curable resin matrix on one face. The fibre used was Fortafil® F510-80K and the resin matrix was Hexcel epoxy M9.6. Additional examples were replicated using Tenax® STS-24K fibre and M9.1 resin.

The processing conditions of temperature, pressure and line speed were such as to cause the resin matrix to penetrate only partially into the carbon fibre layer.

The resulting product had a continuous tacky resin layer on one face and dry fibres on the opposite second face. The fibres were aligned in the warp direction (longitudinally) with no added weft material. The product had a total weight of 242gsm with 38% by weight of resin. The second face was freely exposed and in particular had no resin material applied thereto.

### Example 2

A semi-pre-preg material was made in like manner to Example 1 at 300mm wide with M9.6 resin and F510-80K fibre. In addition, transverse lines of 913 resin were applied to the dry face.

The transverse lines were applied to a release paper using a gravure roll and were then transferred from the paper to the dry face of the semi-preg. The resin applied to the dry face amounted to 2gsm.

### Example 3

A semi-pre-preg material was made at 300mm wide from unidirectional F510-80K carbon fibre tows in sheet form of 500gsm fibre areal weight and 280 gsm heat curable M9.6 resin matrix on one face.

The processing conditions of temperature, pressure and line speed were such as to cause the resin matrix to penetrate only partially into the carbon fibre layer.

Transverse lines of the same M9.6 resin were applied to the dry face.

The lines were applied to a release paper using a reverse roll coating process and were then transferred from the paper to the dry face of the semi-preg. The resin applied to the dry face amounted to 20 gsm.

### Example 4

A pre-preg material was made at 300mm wide from unidirectional F510-80K carbon fibre tows in sheet form of 250gsm fibre areal weight and 280gsm heat curable M9.6 resin matrix on one face.

Processing conditions for this material were such as to cause the resin matrix to fully impregnate or wet out the tows.

In further steps of the process a dry layer of further unidirectional carbon fibre tows in sheet form of 250gsm fibre areal weight was applied to the top surface of the pre-preg thereby forming a semi-preg structure. Finally, transverse lines of the same resin were applied to the dry fibrous face defined by the further tows.

The lines were applied to a release paper using a reverse roll coating process and were then transferred from the paper to the dry face of the semi-preg. The resin applied to the dry face amounted to 20gsm.

### Example 5

In similar manner to Example 4, a pre-preg material was made at 300mm wide from unidirectional F510-80K carbon fibre tows in sheet form of 400gsm fibre areal weight and 280gsm heat curable M9.6 resin matrix on one face.

In further steps of the process a dry layer of unidirectional carbon fibre tows in sheet form of 100gsm fibre areal weight was applied to the top surface of the pre-preg. Finally, transverse lines of the same resin were applied to the dry fibrous face.

The lines were applied to a release paper using a reverse roll coating process and were then transferred from the paper to the dry face of the semi-preg. The resin applied to the dry face amounted to 20gsm.

### Example 6

In similar manner to Example 4 a pre-preg material was made at 300mm wide from unidirectional F510-80K carbon fibre tows in sheet form of 250g / m² fibre areal weight and 280gsm heat curable M9.6 resin matrix on one face.

In further steps of the process a dry layer of unidirectional carbon fibre tows in sheet form of 125gsm fibre areal weight was applied to both surfaces of the pre-preg.

Transverse lines of the same resin were then applied to the dry fibrous faces on both surfaces of the product. The lines were applied to a release paper using a reverse roll coating process and were then transferred from the paper to the dry face of the semi-preg. The resin applied to the dry face amounted to 20gsm.

### Example 7

In similar manner to Example 4, a pre-preg material was made at 300mm wide from unidirectional F510-80K carbon fibre tows in sheet form of 250gsm fibre areal weight and 280gsm heat curable M9.6 resin matrix on one face.

In further steps of the process a dry layer of unidirectional carbon fibre tows in sheet form of 250gsm fibre areal weight was applied to one surface of the pre-preg. Transverse lines of the same resin were applied to the dry fibrous face. The lines were applied to a release paper using a reverse roll coating process and were then transferred from the paper to the dry face of the semi-preg. The resin applied to the dry face amounted to 20gsm.

A continuous film of curable resin matrix for surface finishing aspects or a continuous film of curable gel-coat material was applied to the other pre-preg surface.

Figures 1 to 9 illustrate features of the above Examples. More specifically:
Figure 1 is a diagrammatic sectional view of one form of a moulding material according to the invention in accordance with Examples 2-5;
Figure 2 is a diagrammatic representation of processing equipment used in forming the moulding material of Examples 2-5; and
Figures 3-9 are diagrammatic plan views of the openwork resin layer applied to the surface of the moulding material.
Figure 10 is a diagrammatic representation of a modified form of the equipment of Figure 2 for use in forming a sandwich structure from the materials described with reference to Examples 2-5 and Figures 3-9.

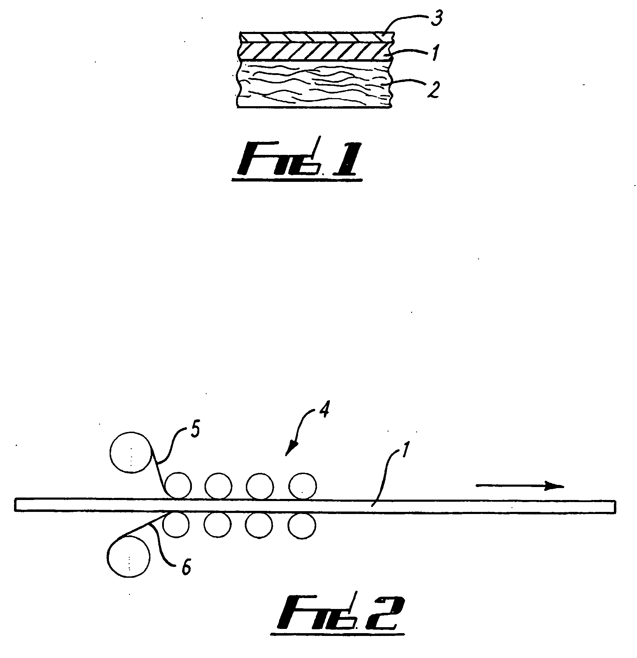

Referring to Figure 1 this shows a fibrous reinforcing layer 1, which in the Examples comprises carbon fibre tows; a resin layer 2 applied to a lower face of the fibre tows which in the Examples may be a film formed wholly of resin material which partially penetrates the fibre tows, or a pre-preg comprising fibre tows fully impregnated with resin which may also partially penetrate the overlaid fibre tows; and an openwork structure 3 of resin lines applied to the exposed dry top face of the tows and which penetrates only minimally into the fibre tows.

As shown in Figure 2, the moulding material may be made by feeding the fibre tows 1 through roller nips 4 together with top and bottom materials 5, 6 carried on release paper supplied from reels.

The top material 5 comprises the openwork resin grid lines 3.

The bottom material 6 comprises the resin film 2, in the case of Examples 2 and 3, or the pre-preg 2 in the case of Examples 4 and 5.

The combined layers 1-3 are driven through the nip rollers 4 which apply pressure and at the same time the material is heated.

The extent of impregnation of the fibre tows 1 is controlled by the process conditions of speed, temperature and pressure. The exposed surface of the fibre tows 1 can be substantially free of resin. Some cold flow of resin can occur at the boundaries of the tow layer, but this can be restricted by selection of the materials and process conditions.

Appropriately supplemented and/or modified apparatus is used for Examples 6 & 7, involving passage of materials through roller nips with application of heat and pressure. The dry reinforcement fibres may be introduced as shown in Figure 2 or alternatively can be introduced at different stages in the process route. Normally at least 20% of the fibres are required to be fed in at the start of the process.

Techniques for forming the prepreg layer are also well known and include solvent free (hot melt) processing via single or double sided resin film impregnation or solution processing by immersion in a resin bath, metering the desired resin quantity and then removing solvent in an oven module.

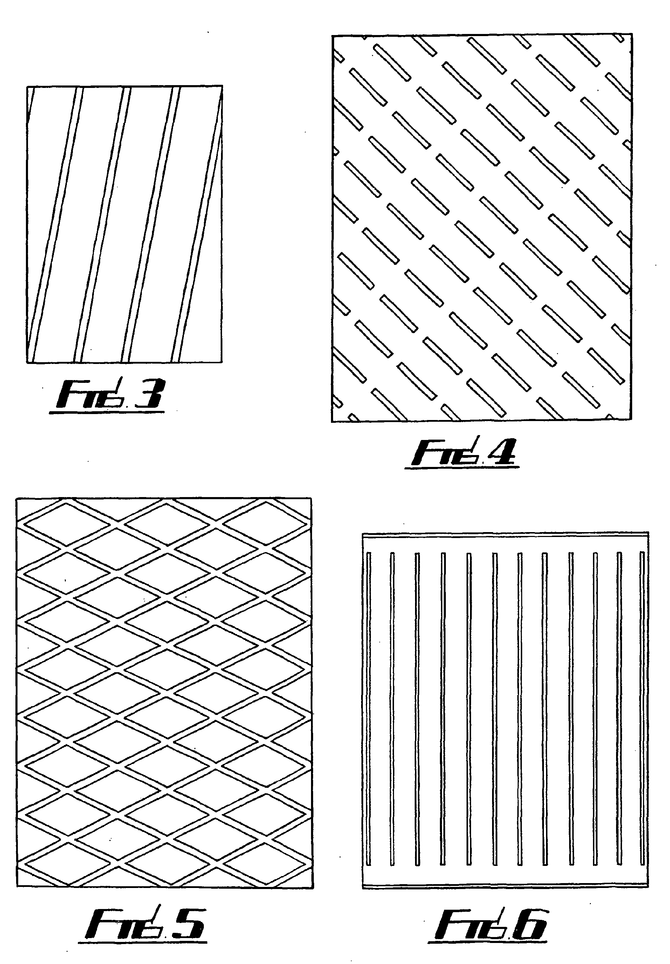

With regard to the openwork grid lines applied to the dry fibre tow surface, possible patterns are shown in Figures 3-9.

Figure 3 shows diagonal lines of 8mm width (along the web movement direction) with 47mm spacings therebetween.

Figure 4 shows broken diagonal lines the sections being 40mm long (27mm in the web direction) with 10mm between section ends.

Figure 5 shows a diamond lattice arrangement, the lines being 4mm wide and each diamond of the lattice being 78.5mm by 40mm respectively longitudinally and transversely of the web direction with a 60° diamond angle.

Figure 6 shows transverse lines of 2mm width, 20mm apart.

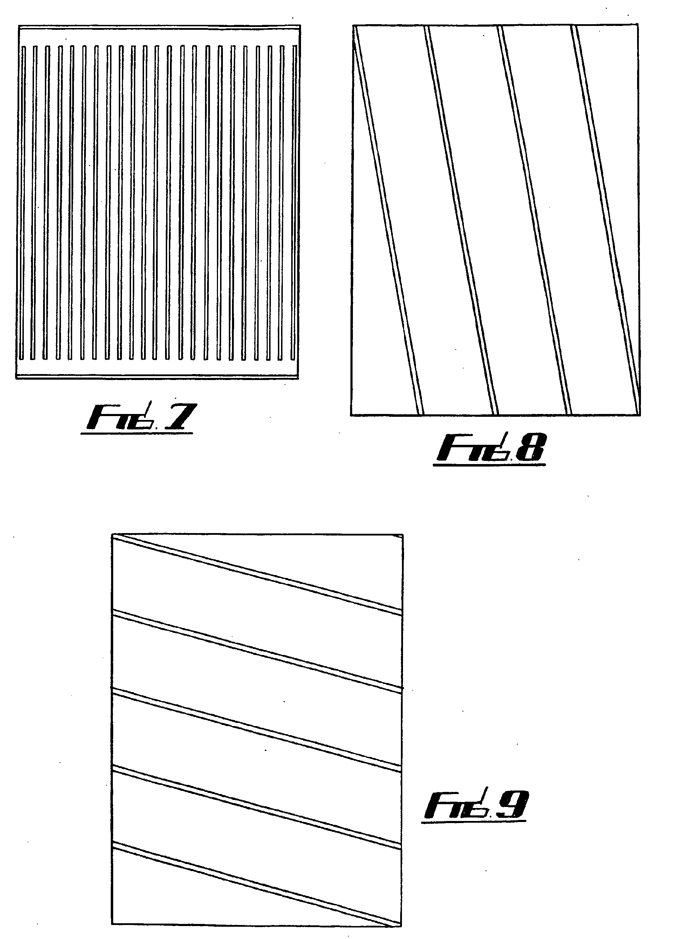

Figure 7 shows transverse lines of 2mm width, 10mm apart.

Figure 8 shows transverse diagonal lines of 4mm width, 59mm apart.

Figure 9 shows longitudinal diagonal lines of 4mm width, 64mm apart.

Further details are shown in the following table:

| **Figure** | **Resin gsm** | **Dry fibre gsm** | **Dry fibre surface area %** |
|---|---|---|---|
| 3 | 0.148 | 0.852 | 85.2 |
| 4 | 0.114 | 0.886 | 88.6 |
| 5 | 0.24 | 0.76 | 76 |
| 6 | 0.104 | 0.896 | 89.6 |
| 7 | 0.2 | 0.8 | 80 |
| 8 | 0.074 | 0.926 | 92.6 |
| 9 | 0.04 | 0.96 | 96 |

It will be seen that the solid resin material of the openwork resin structure represents a minor proportion of the surface area, and indeed is essentially insubstantial relative to the overall area. The openwork resin structure is also minor, or even insubstantial, in relation to the overall weight of resin in the moulding material. The choice of selecting the use of continuous or discontinuous grid lines and degree of fibre impregnation is dependent on processing factors such as the equipment used and the rheology of the resin system. It has, however, been found that discontinuous grids lines appear to be particularly suitable for higher viscosity resins whereas low viscosity resins function satisfactorily in products containing 60% dry fibre.

By way of example, using patterns such as those shown in Figures 3-9, the grid lines may account for 2.1% of total resin in the structure of Example 2, and 6.7% in the structures of Examples 4-7.

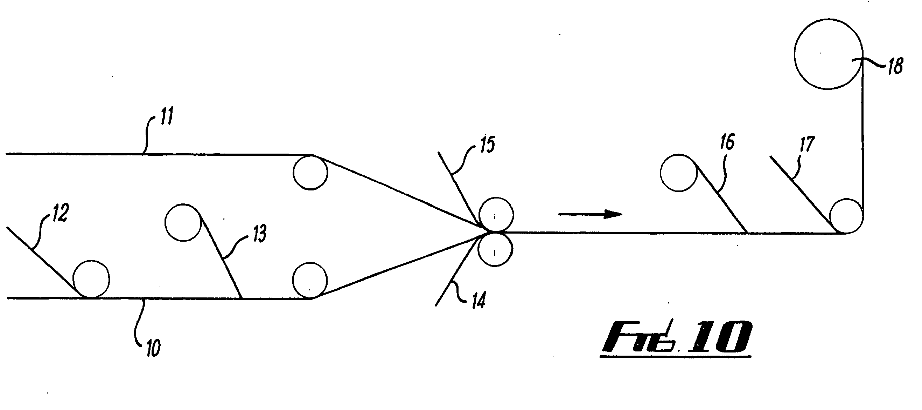

Figure 10 shows processing equipment which can be used in forming a moulding material according to the invention which is a sandwich structure having an openwork resin layer applied to both top and bottom surfaces of the sandwich. Each such openwork resin layer may be as shown in Figures 3-9, and the two resin layers may be same or different.

As shown in Figure 10, two fibrous reinforcing layers 10, 11, which may be carbon fibre tows and which may be of 250gsm fibre areal weight are fed in vertically spaced-apart disposition (e.g. about 1 metre).

A 280gsm resin layer film 12 carried on a release paper is fed onto the top face of the bottom layer 10.

The film 12 is applied to the layer 10 using moderate heat (about 60°C) and light pressure over a support table to achieve a tack transfer of the resin to the fibrous surface.

The support paper 13 is removed at ambient or a slightly elevated temperature, say 15-20°C.

The top layer 11 is then applied to the exposed resinous surface at a roller nip, at a temperature of about 40°C. At the same nip resin grid layers 14, 15 supported on release papers are applied to the top and bottom exposed surfaces of the combined layers 10, 11.

The resulting sandwich of fibre layers 10, 11, resin layer 12, and resin grid layers 14, 15 is then processed under low pressure, say 0.5 bar, and elevated temperature say 40-50°C.

The sandwich is then cooled to 15-20°C, the release paper 16 of the top resin grid layer 15 is removed, and a polythene interleave film 17 is applied to the exposed resin grid layer 15, and the sandwich is then rolled onto a core 18 for storage.

With this procedure, a portion of the resin layer 12 impregnates the upper and lower fibre layers 10, 11 leaving the remainder of the resin layer 12 as a discrete layer in the middle of the sandwich. About 10 to 50%, typically 15% of the resin layer impregnates each fibre layer 10, 11, typically leaving about 70% of the resin layer in the middle, and about 70% of the fibre layers 10, 11 being left 'dry'. The resin grid layers 14, 15 provide an insignificant amount of impregnating material. The dry fibre surface may be as mentioned above with reference to figures 3-9.

It is of course to be understood that the invention is not intended to be restricted to the details of the above Examples.

## Claims

1. A moulding material comprising a layer of fibrous reinforcing material (1) having on opposite surfaces thereof respectively a first layer (2) of a resin which partially impregnates the fibrous material, and a further resin layer (3) which retains in position surface fibres of the fibrous material, **characterised in that** the further resin layer (3) is of lower weight than the first layer and is formed as an openwork structure comprising either space enclosing structures, or linear elements or lines with spaces therebetween through which the fibrous material is exposed, wherein the proportion of total resin content of the further layer is up to 5% wt. and the resin of the further layer is self-supporting, and wherein said first resin layer (2) is of sufficient quantity to be capable of impregnating at least a major part of the fibrous reinforcing material (1) when subjected to heat and pressure during processing of the moulding material.

2. A moulding material according to claim 1 **characterised in that** the fibrous reinforcing material (1) is unidirectional.

3. A moulding material according to claim 2 **characterised in that** the fibrous reinforcing material comprises multiple side by side fibre tows.

4. A moulding material according to claim 2 or 3 which is an elongate structure **characterised in that** the said common fibre direction extends longitudinally of said structure.

5. A moulding material according to any one of claims 1 to 4 **characterised in that** the fibrous reinforcing material comprises carbon fibre material.

6. A moulding material according to any one of claims 1 to 5 **characterised in that** the fibrous reinforcing material comprises discontinuous fibres.

7. A moulding material according to any one of claims 1 to 6 **characterised in that** the said first resin layer (2) comprises a solid substantially continuous film, wherein the substantially continuous film is substantially without spacings or openings.

8. A moulding material according to any one of claims 1 to 7 **characterised in that** the said first resin layer (2) comprises a pre-preg layer.

9. A moulding material according to any one of claims 1 to 8 **characterised in that** the said first resin layer (2) comprises a heat-curable thermosetting resin matrix.

10. A moulding material according to claims 1 to 9 **characterised in that** the quantity of the said first resin layer (2) is sufficient to impregnate wholly the said fibrous reinforcing material (1).

11. A moulding material according to any one of claims 1 to 10 **characterised in that** the said further resin layer (3) and the said first resin layer (2) have compatible properties such that the respective layers (2, 3) are capable of blending on application of heat and pressure thereto to form cured layers having integral structural properties throughout.

12. A moulding material according to claim 11 **characterised in that** the said first and further resin layers (2, 3) are formed from the same resin.

13. A moulding material according to any one of claims 1 to 12 **characterised in that** solid parts of the said further resin layer (3) occupy a minor proportion of the surface area of the fibrous layer (1), said spaces therein collectively making up the major part.

14. A moulding material according to claim 13 **characterised in that** the solid parts occupy less than 25% of the surface area.

15. A moulding material according to claim 14 **characterised in that** the solid parts occupy 4% to 24% of the surface area.

16. A moulding material according to any one of claims 1 to 15 **characterised in that** the said further resin layer (3) comprises a grid pattern of solid linear elements enclosing said spaces.

17. A moulding material according to claim 16 **characterised in that** said grid pattern is a regular pattern whereby said spaces are of a common geometrical shape.

18. A moulding material according to any one of claims 1 to 15 **characterised in that** the said further resin layer (3) comprises a perforate web, perforations therein forming the said spaces.

19. A moulding material according to any one of claims 1 to 15 **characterised in that** the said further resin layer (3) comprises separate solid parts.

20. A moulding material according to any one of claims 1 to 19 **characterised in that** the said first and further layers (2, 3) are linked by resin parts extending through the fibrous material (1).

21. A moulding material according to any one of claims 1 to 20 **characterised in that** the proportion of total resin content for the further layer (3) is up to 1%.

22. A moulding material according to any one of claims 1 to 21 **characterised in that** the resin of the first layer (2) amounts to 30-50% by weight of the moulding material.

23. A moulding material according to claim 22 **characterised in that** the resin of the first layer (2) amounts to 35-40% by weight of the moulding material.

24. A moulding material according to any one of claims 1 to 23 **characterised in that** the resin of the further layer (3) amounts to 0.1 to 20% by weight of the moulding material.

25. A moulding material according to claim 24 **characterised in that** the resin of the further layer (3) amounts to 0.1 to 10% by weight of the moulding material.

26. A moulding material according to claim 24 **characterised in that** the resin of the further layer (3) amounts to 0.1 to 1% by weight of the moulding material.

27. A moulding material according to any one of claims 1 to 26 **characterised in that** the weight of the moulding material is 200-800gsm.

28. A moulding material according to any one of claims 1 to 27 **characterised by** the incorporation of an additional layer of fibrous reinforcing material thereon.

29. A moulding material according to any one of claims 1 to 28 **characterised in that** the proportion of the resin of the said first layer which impregnates the said fibrous reinforcing material is 5% to 25%.

30. A moulding material sandwich **characterised in that** it comprises at least one first body of moulding material according to any one of claims 1 to 29 with a further structure applied to the said first resin layer of such body, said structure comprising further fibrous material.

31. A moulding material sandwich according to claim 30 wherein said further structure comprises a further body of moulding material according to any one of claims 1 to 29 whereby said first and further bodies have a common said first resin layer at confronting surfaces thereof, and said further resin layers on opposite surfaces thereof.

32. A method of forming a moulding material according to any one of claims 1 to 29 wherein a first layer (2) of resin is applied to one face of a layer (1) of fibrous reinforcing material so as to partially impregnate the fibrous material, and a further layer (3) of resin material is applied to the opposite face of the layer of fibrous reinforcing material so as to retain in position surface fibres of the fibrous material, **characterised in that** the further resin layer (3) is of lower weight than the first layer and is formed as an openwork structure comprising either space enclosing structures, or linear elements or lines with spaces therebetween through which the fibrous material is exposed, wherein the proportion of total resin content of the further layer is up to 5% by wt, and the resin of the further layer is self-supporting, and wherein said first resin layer (2) is of sufficient quantity to be capable of impregnating at least a major part of the fibrous reinforcing material (1) when subjected to heat and pressure during processing of the moulding material.

33. A method of forming a moulding material according to claim 32 wherein additional fibrous reinforcing material is applied to a composite structure comprising fibrous reinforcing material impregnated with a resin thereby to form a layer of said fibrous reinforcing material.

34. A method of forming a moulding material sandwich according to claims 30 or 31 wherein at least one first body of moulding material is made in accordance with the method of claim 32 and a further structure comprising further fibrous material is applied to the said first resin layer of such body.

35. A method of forming a moulding material sandwich according to claim 31 wherein additional fibrous reinforcing material is applied to opposite faces of composite structure made in accordance with the method of claim 32, comprising fibrous reinforcing material impregnated with a resin thereby to form two layers of said fibrous reinforcing material having a common first layer of said resin which is applied to one face of, and partially impregnates, each said layer of fibrous reinforcing material, and a respective further layer of resin material is applied to the opposite faces of the layers of fibrous reinforcing material.

36. A method of manufacturing a shaped moulded component wherein multiple layers of moulding material according to any one of claims 1 to 29, or a moulding material sandwich according to claim 30 or 31, are applied to a shaped moulding surface and are then cured by application of heat and pressure.

37. A shaped moulded product made with a moulding material according to any one of claims 1-29 or a moulding material sandwich according to claim 30 or 31.

## Patentansprüche

1. Formmasse, umfassend eine Schicht eines faserigen Verstärkungsmaterials (1), welche an gegenüberliegenden Oberflächen davon eine erste Schicht (2) eines Harzes, welches das Fasermaterial teilweise tränkt, bzw. eine weitere Harzschicht (3), die oberflächige Fasern des Fasermaterials in Position hält, aufweist, **dadurch gekennzeichnet, dass** die weitere Harzschicht (3) ein geringeres Gewicht hat als die erste Schicht und als eine durchbrochene Struktur ausgeführt ist, die entweder freie Flächen umschließende Strukturen oder lineare Elemente oder Linien mit Freiräumen dazwischen umfasst, in denen das Fasermaterial freiliegt, wobei der Anteil des Harzgehalts bei der weiteren Schicht insgesamt bis zu 5 Gew.-% beträgt und das Harz der weiteren Schicht selbsttragend ist und wobei die erste Harzschicht (2) von ausreichender Menge ist, um mindestens einen größeren Teil des faserigen Verstärkungsmaterials (1) zu tränken, wenn sie bei der Verarbeitung der Formmasse Hitze und Druck ausgesetzt wird.

2. Formmasse nach Anspruch 1, **dadurch gekennzeichnet, dass** das faserige Verstärkungsmaterial (1) unidirektional ist.

3. Formmasse nach Anspruch 2,-**dadurch gekennzeichnet, dass** das faserige Verstärkungsmaterial mehrere nebeneinander liegende Faserstränge umfasst.

4. Formmasse nach Anspruch 2 oder 3, die eine langgestreckte Struktur ist, **dadurch gekennzeichnet, dass** sich die gemeinsame Faserrichtung längs der betreffenden Struktur erstreckt.

5. Formmasse nach einem der Ansprüche 1 bis 4, **dadurch gekennzeichnet, dass** das faserige Verstärkungsmaterial Kohlefasermaterial umfasst.

6. Formmasse nach einem der Ansprüche 1 bis 5, **dadurch gekennzeichnet, dass** das faserige Verstärkungsmaterial Spinnfasern umfasst.

7. Formmasse nach einem der Ansprüche 1 bis 6, **dadurch gekennzeichnet, dass** die erste Harzschicht (2) einen festen, im Wesentlichen durchgängigen Belag umfasst, wobei der im Wesentlichen durchgängige Belag im Wesentlichen keine Freiflächen oder Öffnungen aufweist.

8. Formmasse nach einem der Ansprüche 1 bis 7, **dadurch gekennzeichnet, dass** die erste Harzschicht (2) eine Prepreg-Schicht umfasst.

9. Formmasse nach einem der Ansprüche 1 bis 8, **dadurch gekennzeichnet, dass** die erste Harzschicht (2) eine hitzehärtbare Duroplastmatrix umfasst.

10. Formmasse nach einem der Ansprüche 1 bis 9, **dadurch gekennzeichnet, dass** die Menge der ersten Harzschicht (2) ausreicht, um das faserige Verstärkungsmaterial (1) vollständig zu tränken.

11. Formmasse nach einem der Ansprüche 1 bis 10, **dadurch gekennzeichnet, dass** die weitere Harzschicht (3) und die erste Harzschicht (2) kompatible Eigenschaften besitzen, sodass sich die jeweiligen Schichten (2, 3) bei Beaufschlagung mit Hitze und Druck vermischen können, um ausgehärtete Schichten mit durchgängig integralen Struktureigenschaften zu bilden.

12. Formmasse nach Anspruch 11, **dadurch gekennzeichnet, dass** die erste und die weitere Harzschicht (2, 3) aus demselben Harz gebildet sind.

13. Formmasse nach einem der Ansprüche 1 bis 12, **dadurch gekennzeichnet, dass** feste Teile der weiteren Harzschicht (3) einen geringeren Teil der Oberfläche der faserigen Schicht (1) bedecken, wobei die Freiräume darin zusammengenommen den größeren Teil ausmachen.

14. Formmasse nach Anspruch 13, **dadurch gekennzeichnet, dass** die festen Teile weniger als 25 % der Oberfläche bedecken.

15. Formmasse nach Anspruch 14, **dadurch gekennzeichnet, dass** die festen Teile 4 % bis 24 % der Oberfläche bedecken.

16. Formmasse nach einem der Ansprüche 1 bis 15, **dadurch gekennzeichnet, dass** die weitere Harzschicht (3) ein Gittermuster aus festen linearen Elementen aufweist, die die Freiräume umschließen.

17. Formmasse nach Anspruch 16, **dadurch gekennzeichnet, dass** das Gittermuster ein regelmäßiges Muster ist, wodurch die Freiräume alle dieselbe geometrische Form haben.

18. Formmasse nach einem der Ansprüche 1 bis 15, **dadurch gekennzeichnet, dass** die weitere Harzschicht (3) ein durchbrochenes Netz umfasst, wobei die Durchbrüche darin die Freiräume bilden.

19. Formmasse nach einem der Ansprüche 1 bis 15, **dadurch gekennzeichnet, dass** die weitere Harzschicht (3) voneinander getrennte feste Teile umfasst.

20. Formmasse nach einem der Ansprüche 1 bis 19, **dadurch gekennzeichnet, dass** die erste und die weitere Schicht (2, 3) durch Harzteile verbunden sind, die sich durch das Fasermaterial (1) erstrecken.

21. Formmasse nach einem der Ansprüche 1 bis 20, **dadurch gekennzeichnet, dass** der Anteil des Harzgehalts insgesamt für die weitere Schicht (3) bis zu 1 % beträgt.

22. Formmasse nach einem der Ansprüche 1 bis 21, **dadurch gekennzeichnet, dass** das Harz der ersten Schicht (2) bis zu 30-50 % des Gewichts der Formmasse ausmacht.

23. Formmasse nach Anspruch 22, **dadurch gekennzeichnet, dass** das Harz der ersten Schicht (2) bis zu 35-40 % des Gewichts der Formmasse ausmacht.

24. Formmasse nach einem der Ansprüche 1 bis 23, **dadurch gekennzeichnet, dass** das Harz der weiteren Schicht (3) 0,1 bis 20 % des Gewichts der Formmasse ausmacht.

25. Formmasse nach Anspruch 24, **dadurch gekennzeichnet, dass** das Harz der weiteren Schicht (3) 0,1 bis 10 % des Gewichts der Formmasse ausmacht.

26. Formmasse nach Anspruch 24, **dadurch gekennzeichnet, dass** das Harz der weiteren Schicht (3) 0,1 bis 1 % des Gewichts der Formmasse ausmacht.

27. Formmasse nach einem der Ansprüche 1 bis 26, **dadurch gekennzeichnet, dass** das Gewicht der Formmasse 200-800 g/m² beträgt.

28. Formmasse nach einem der Ansprüche 1 bis 27, **gekennzeichnet durch** die Einarbeitung einer zusätzlichen Schicht faserigen Verstärkungsmaterials darauf.

29. Formmasse nach einem der Ansprüche 1 bis 28, **dadurch gekennzeichnet, dass** der Anteil von Harz der ersten Schicht, der das faserige Verstärkungsmaterial tränkt, 5 % bis 25 % beträgt.

30. Formmasse-Sandwich, **dadurch gekennzeichnet, dass** es mindestens einen ersten Körper aus Formmasse nach einem der Ansprüche 1 bis 29 umfasst, mit einer weiteren Struktur, die auf der ersten Harzschicht eines solchen Körpers angebracht ist, wobei die Struktur weiteres faseriges Material umfasst.

31. Formmasse-Sandwich nach Anspruch 30, wobei die weitere Struktur-einen weiteren Körper aus Formmasse nach einem der Ansprüche 1 bis 29 umfasst, wodurch der erste und der weitere Körper eine gemeinsame erste Harzschicht an den einander zugewandten Oberflächen davon sowie die weiteren Harzschichten an den gegenüberliegenden Oberflächen davon aufweisen.

32. Verfahren zum Herstellen einer Formmasse nach einem der Ansprüche 1 bis 29, wobei eine erste Schicht (2) Harz auf eine Seite einer Schicht (1) faserigen Verstärkungsmaterials aufgebracht wird, um so das Fasermaterial teilweise zu tränken, und eine weitere Schicht (3) Harzmaterial auf die gegenüberliegende Seite der Schicht faserigen Verstärkungsmaterials aufgebracht wird, um oberflächige Fasern des Fasermaterials in Position zu halten, **dadurch gekennzeichnet, dass** die weitere Harzschicht (3) ein geringeres Gewicht hat als die erste Schicht und als eine durchbrochene Struktur ausgeführt ist, die entweder freie Flächen umschließende Strukturen oder lineare Elemente oder Linien mit Freiräumen dazwischen umfasst, in denen das Fasermaterial freiliegt, wobei der Anteil des Harzgehalts insgesamt bei der weiteren Schicht bis zu 5 Gew.-% beträgt und das Harz der weiteren Schicht selbsttragend ist und wobei die erste Harzschicht (2) von ausreichender Menge ist, um mindestens einen größeren Teil des faserigen Verstärkungsmaterials (1) zu tränken, wenn sie bei der Verarbeitung der Formmasse Hitze und Druck ausgesetzt wird.

33. Verfahren zum Herstellen einer Formmasse nach Anspruch 32, wobei zusätzliches faseriges Verstärkungsmaterial auf eine zusammengesetzte Struktur, welche harzgetränktes, faseriges Verstärkungsmaterial umfasst, aufgebracht wird, um dadurch eine Schicht des faserigen Verstärkungsmaterials zu bilden.

34. Verfahren zum Herstellen eines Formmasse-Sandwichs nach Anspruch 30 oder 31, wobei mindestens ein erster Körper aus Formmasse nach dem Verfahren von Anspruch 32 hergestellt ist und eine weitere Struktur, die weiteres Fasermaterial umfasst, auf die erste Harzschicht eines solchen Körpers aufgebracht wird.

35. Verfahren zum Herstellen eines Formmasse-Sandwichs nach Anspruch 31, wobei zusätzliches faseriges Verstärkungsmaterial auf gegenüberliegende Seiten der zusammengesetzten Struktur, die nach dem Verfahren von Anspruch 32 hergestellt wurde, aufgebracht wird, umfassend harzgetränktes, faseriges Verstärkungsmaterial, um zwei Schichten des faserigen Verstärkungsmaterials zu bilden mit einer gemeinsamen ersten Schicht dieses Harzes, die auf eine Seite jeder der Schichten faserigen Verstärkungsmaterials aufgebracht ist und diese teilweise tränkt, und eine jeweilige weitere Schicht Harzmaterial auf die gegenüberliegenden Seiten der Schichten faserigen Verstärkungsmaterials aufgebracht wird.

36. Verfahren zur Herstellung eines Formteils, wobei mehrere Schichten von Formmasse nach einem der Ansprüche 1 bis 29 oder ein Formmasse-Sandwich nach Anspruch 30 oder 31 auf eine geformte Oberfläche aufgebracht und dann durch Beaufschlagung mit Hitze und Druck ausgehärtet werden.

37. Formprodukt, hergestellt aus einer Formmasse nach einem der Ansprüche 1-29 oder einem Formmasse-Sandwich nach Anspruch 30 oder 31.

## Revendications

1. Une matière à mouler comportant une couche de matière de renforcement fibreuse (1) ayant sur des surfaces opposées de cette dernière respectivement une première couche (2) d'une résine qui imprègne partiellement la matière fibreuse, et une couche de résine supplémentaire (3) qui maintient en position les fibres de surface de la matière fibreuse, **caractérisée en ce que** la couche de résine supplémentaire (3) est d'un poids inférieur à la première couche et est formée comme une structure ajourée comportant soit des structures entourant des espaces, soit des éléments linéaires ou lignes avec des espaces entre eux/elles à travers lesquels la matière fibreuse est exposée, où la proportion de contenu de résine total de la couche supplémentaire va jusqu'à 5 % poids et la résine de la couche supplémentaire est autoportante, et où ladite première couche de résine (2) est en quantité suffisante pour être capable d'imprégner au moins une majeure partie de la matière de renforcement fibreuse (1) lorsque soumise à la chaleur et à la pression durant le traitement de la matière à mouler.

2. Une matière à mouler selon la revendication 1 **caractérisée en ce que** la matière de renforcement fibreuse (1) est unidirectionnelle.

3. Une matière à mouler selon la revendication 2 **caractérisée en ce que** la matière de renforcement fibreuse comporte des étoupes de fibre côte à côte multiples.

4. Une matière à mouler selon la revendication 2 ou 3 qui est une structure allongée **caractérisée en ce que** ladite direction de fibre commune s'étend longitudinalement par rapport à ladite structure.

5. Une matière à mouler selon n'importe laquelle des revendications 1 à 4 **caractérisée en ce que** la matière de renforcement fibreuse comporte une matière en fibre de carbone.

6. Une matière à mouler selon n'importe laquelle des revendications 1 à 5 **caractérisée en ce que** la matière de renforcement fibreuse comporte des fibres discontinues.

7. Une matière à mouler selon n'importe laquelle des revendications 1 à 6 **caractérisée en ce que** ladite première couche de résine (2) comporte un film essentiellement continu solide, où le film essentiellement continu est essentiellement sans espacements ou ouvertures.

8. Une matière à mouler selon n'importe laquelle des revendications 1 à 7 **caractérisée en ce que** ladite première couche de résine (2) comporte une couche préimprégnée.

9. Une matière à mouler selon n'importe laquelle des revendications 1 à 8 **caractérisée en ce que** ladite première couche de résine (2) comporte une couche de résine thermodurcissable polymérisable à la chaleur.

10. Une matière à mouler selon les revendications 1 à 9 **caractérisée en ce que** la quantité de ladite première couche de résine (2) est suffisante pour imprégner entièrement ladite matière de renforcement fibreuse (1).

11. Une matière à mouler selon n'importe laquelle des revendications 1 à 10 **caractérisée en ce que** ladite couche de résine supplémentaire (3) et ladite première couche de résine (2) ont des propriétés compatibles de telle sorte que les couches respectives (2, 3) sont capables de se mélanger lors d'une application de chaleur et de pression à ces dernières pour former des couches durcies ayant des propriétés structurelles intégrales d'un bout à l'autre.

12. Une matière à mouler selon la revendication 11 **caractérisée en ce que** ladite première couche de résine et ladite couche de résine supplémentaire (2, 3) sont formées à partir de la même résine.

13. Une matière à mouler selon n'importe laquelle des revendications 1 à 12 **caractérisée en ce que** des parties solides de ladite couche de résine supplémentaire (3) occupent une proportion mineure de la superficie de la couche fibreuse (1), lesdits espaces à l'intérieur de cette dernière constituant collectivement la majeure partie.

14. Une matière à mouler selon la revendication 13 **caractérisée en ce que** les parties solides occupent moins de 25 % de la superficie.

15. Une matière à mouler selon la revendication 14 **caractérisée en ce que** les parties solides occupent de 4 % à 24 % de la superficie.

16. Une matière à mouler selon n'importe laquelle des revendications 1 à 15 **caractérisée en ce que** ladite couche de résine supplémentaire (3) comporte un motif de grille d'éléments linéaires solides entourant lesdits espaces.

17. Une matière à mouler selon la revendication 16 **caractérisée en ce que** ledit motif de grille est un motif régulier grâce à quoi lesdits espaces ont un profil géométrique commun.

18. Une matière à mouler selon n'importe laquelle des revendications 1 à 15 **caractérisée en ce que** ladite couche de résine supplémentaire (3) comporte une toile perforée, les perforations à l'intérieur de cette dernière formant lesdits espaces.

19. Une matière à mouler selon n'importe laquelle des revendications 1 à 15 **caractérisée en ce que** ladite couche de résine supplémentaire (3) comporte des parties solides distinctes.

20. Une matière à mouler selon n'importe laquelle des revendications 1 à 19 **caractérisée en ce que** ladite première couche et ladite couche supplémentaire (2, 3) sont liées par des parties résineuses s'étendant à travers la matière fibreuse (1).

21. Une matière à mouler selon n'importe laquelle des revendications 1 à 20 **caractérisée en ce que** la proportion de contenu de résine total pour la couche supplémentaire (3) va jusqu'à 1 %.

22. Une matière à mouler selon n'importe laquelle des revendications 1 à 21 **caractérisée en ce que** la résine de la première couche (2) équivaut à 30-50 % poids de la matière à mouler.

23. Une matière à mouler selon la revendication 22 **caractérisée en ce que** la résine de la première couche (2) équivaut à 35-40 % poids de la matière à mouler.

24. Une matière à mouler selon n'importe laquelle des revendications 1 à 23 **caractérisée en ce que** la résine de la couche supplémentaire (3) équivaut à entre 0,1 et 20 % poids de la matière à mouler.

25. Une matière à mouler selon la revendication 24 **caractérisée en ce que** la résine de la couche supplémentaire (3) équivaut à entre 0,1 et 10 % poids de la matière à mouler.

26. Une matière à mouler selon la revendication 24 **caractérisée en ce que** la résine de la couche supplémentaire (3) équivaut à entre 0,1 et 1 % poids de la matière à mouler.

27. Une matière à mouler selon n'importe laquelle des revendications 1 à 26 **caractérisée en ce que** le poids de la matière à mouler est de 200-800 g/m².

28. Une matière à mouler selon n'importe laquelle des revendications 1 à 27 **caractérisée par** l'incorporation d'une couche additionnelle de matière de renforcement fibreuse sur cette dernière.

29. Une matière à mouler selon n'importe laquelle des revendications 1 à 28 **caractérisée en ce que** la proportion de la résine de ladite première couche qui imprègne ladite matière de renforcement fibreuse est de 5 % à 25 %.

30. Un sandwich de matière à mouler **caractérisé en ce qu'**il comporte au moins un premier corps de matière à mouler selon n'importe laquelle des revendications 1 à 29 avec une structure supplémentaire appliquée à ladite première couche de résine d'un corps de la sorte, ladite structure comportant une matière fibreuse supplémentaire.

31. Un sandwich de matière à mouler selon la revendication 30 où ladite structure supplémentaire comporte un corps supplémentaire de matière à mouler selon n'importe laquelle des revendications 1 à 29 grâce à quoi lesdits premier corps et corps supplémentaires ont une dite première couche de résine commune à des surfaces de front de ces derniers, et lesdites couches de résine supplémentaires sur des surfaces opposées de ces derniers.

32. Un procédé pour former une matière à mouler selon n'importe laquelle des revendications 1 à 29 où une première couche (2) de résine est appliquée à une face d'une couche (1) de matière de renforcement fibreuse de façon à imprégner partiellement la matière fibreuse, et une couche supplémentaire (3) de matière résineuse est appliquée à la face opposée de la couche de matière de renforcement fibreuse de façon à maintenir en position les fibres de surface de la matière fibreuse, **caractérisé en ce que** la couche de résine supplémentaire (3) est d'un poids inférieur à la première couche et est formée comme une structure ajourée comportant soit des structures entourant des espaces, soit des éléments linéaires ou lignes avec des espaces entre eux/elles à travers lesquels la matière fibreuse est exposée, où la proportion de contenu de résine total de la couche supplémentaire va jusqu'à 5 % poids et la résine de la couche supplémentaire est autoportante, et où ladite première couche de résine (2) est en quantité suffisante pour être capable d'imprégner au moins une majeure partie de la matière de renforcement fibreuse (1) lorsque soumise à la chaleur et à la pression durant le traitement de la matière à mouler.

33. Un procédé pour former une matière à mouler selon la revendication 32 où une matière de renforcement fibreuse additionnelle est appliquée à une structure composite comportant une matière de renforcement fibreuse imprégnée avec une résine pour former ainsi une couche de ladite matière de renforcement fibreuse.

34. Un procédé pour former un sandwich de matière à mouler selon les revendications 30 ou 31 où au moins un premier corps de matière à mouler est fait conformément au procédé de la revendication 32 et une structure supplémentaire comportant une matière fibreuse supplémentaire est appliquée à ladite première couche de résine d'un corps de la sorte.

35. Un procédé pour former un sandwich de matière à mouler selon la revendication 31 où une matière de renforcement fibreuse additionnelle est appliquée à des faces opposées de la structure composite faite conformément au procédé de la revendication 32, comportant une matière de renforcement fibreuse imprégnée avec une résine pour former ainsi deux couches de ladite matière de renforcement fibreuse ayant une première couche commune de ladite résine qui est appliquée à une face de, et imprègne partiellement, chaque dite couche de matière de renforcement fibreuse, et une couche supplémentaire respective de matière résineuse est appliquée aux faces opposées des couches de matière de renforcement fibreuse.

36. Un procédé pour fabriquer un composant moulé profilé où des couches multiples de matière à mouler selon n'importe laquelle des revendications 1 à 29, ou un sandwich de matière à mouler selon la revendication 30 ou 31, sont appliqués à une surface à mouler profilée et sont ensuite durcis par application de chaleur et de pression.

37. Un produit moulé profilé fait avec une matière à mouler selon n'importe laquelle des revendications 1-29 ou un sandwich de matière à mouler selon la revendication 30 ou 31.
